# EUROPEAN PATENT APPLICATION

(11) **EP 2 094 015 A1**
(43) Date of publication of application: **26.08.2009**
(21) Application number: 07832235.1
(22) Date of filing: 21.11.2007
(51) Int. Cl.: H04N 7/26

(54) **MOVING PICTURE DECODER, SEMICONDUCTOR DEVICE, VIDEO DEVICE, AND MOVING PICTURE DECODING METHOD**

(30) Priority: 11.12.2006 JP 2006333776
(71) Applicant: Panasonic Corporation, Kadoma-shi Osaka 571-8501 (JP)
(72) Inventor: MINAMI, Masaki, Osaka-shi, Osaka 540-6207 (JP); FUJII, Shigeki, Osaka-shi, Osaka 540-6507 (JP); KIMURA, Kozo, Osaka-shi, Osaka 540-6207 (JP); YOSHIOKA, Kosuke, Osaka-shi, Osaka 540-6207 (JP); YASUDA, Makoto, Osaka-shi, Osaka 540-6207 (JP)
(74) Representative: Eisenführ, Speiser & Partner
(86) International application number: PCT/JP2007/072505
(87) International publication number: WO 2008/072452

(57) **Abstract**

A moving picture decoding device according to the present invention includes: a determination unit configured to determine the header information and the compressed image data in the stream; a header information storage unit configured to temporarily store the header information determined by the determination unit; a header address storage unit configured to store a header end address indicating an end of header information in a picture, the header end address being an address of the header information storage unit; a compressed image storage unit configured to temporarily store the compressed image data determined by the determination unit; an image address storage unit configured to store an image end address indicating an end of compressed image data in the picture, the image end address being an address of the compressed image storage unit; a header analysis unit configured to analyze the header information for each picture, based on the header end address; and a decoding unit configured to decode the compressed image data for each picture, based on the image end address and a result of the analysis by the header analysis unit, wherein the header analysis unit is configured to analyze header information of a picture immediately after the picture being decoded by the decoding unit.

## Description

### Technical Field

The present invention relates to moving picture decoding devices which decode a stream including header information and compressed image data and, in particular, to a moving picture decoding device including a processor which analyzes header information and a decoder which decodes compressed image data.

### Background Art

In recent years, the technological advancement of digital video devices has been remarkable, and video devices which code and decode a moving picture have been in widespread use. In the case of performing such image processing, image processing devices which divide the processing and in which processing units operate in parallel have been mainly used. In the technology competition, however, limits to processing performance and memory usage of these devices are strict, and the complexity of a moving picture decoding process is increasing due to the technological advancement.

For instance, in the H. 264 standard (MPEG-4 AVC standard), two types of coding-context-adaptive variable length coding (CAVLC) and context-adaptive binary arithmetic coding (CABAC)-are selectable as a variable length coding method. The context-adaptive denotes a method for adaptively selecting an efficient coding method depending on a situation. However, the complexity of a variable length coding process and a variable length decoding process is increasing.

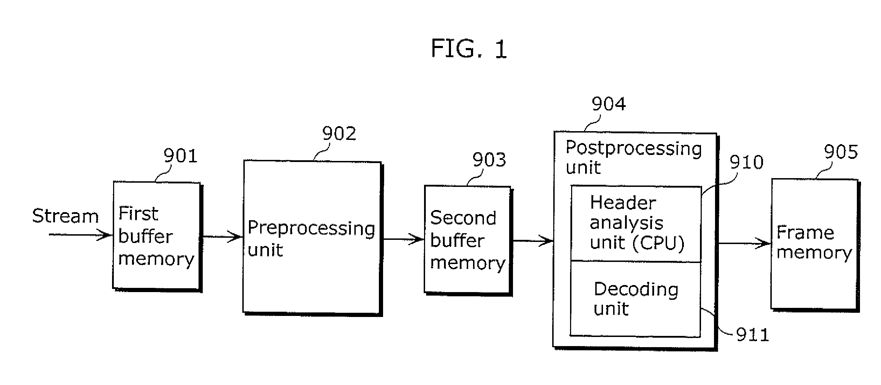

FIG. 1 is a block diagram illustrating a structure of a conventional moving picture decoding device. The moving picture decoding device in the figure includes a first buffer memory 901, a preprocessing unit 902, a second buffer memory 903, a postprocessing unit 904, and a frame memory 905, and decodes a stream in two steps consisting of preprocessing and postprocessing.

First, a stream which contains header information and compressed image data and to which the CABAC is used is inputted to the first buffer memory 901. The preprocessing unit 902 performs context-adaptive binary arithmetic decoding (CABAD) on the stream, and stores, in the second buffer memory 903, the stream to which the CABAD is used. Since an amount of processing with the CABAD is large, a certain amount of the stream to which the CABAD is used is stored in the second buffer memory 903.

The postprocessing unit 904 includes a header analysis unit 910 which extracts various parameters by analyzing the header information included in the stream stored in the second buffer memory 903 and a decoding unit 911 which performs an inverse quantization process, an inverse orthogonal transformation process, and motion compensation according to the extracted various parameters (see, for example, Non-patent Reference 1). A picture decoded in this manner is stored in the frame memory 905.
Non-patent Reference 1: "Media Processor for Multimedia Consumer Products 'Media Core Processor'", Matsushita Technical Journal, Vol. 45, No. 2, April 1999.

### Disclosure of Invention

### Problems that Invention is to Solve

The following describes problems that the present invention is to solve with reference to the drawings.

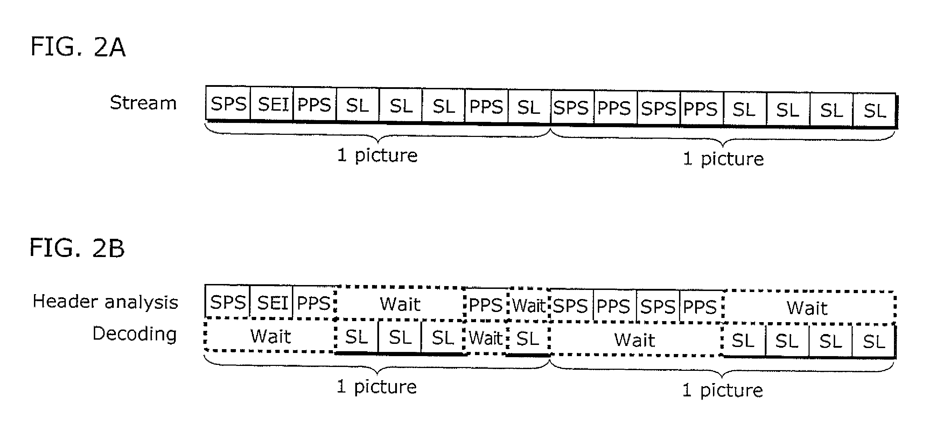

FIG. 2A is a schematic diagram of an example of a stream. In the H. 264 standard, a stream can be considered as a set of units each of which is referred to as a network abstraction layer (NAL) unit. The NAL unit includes a NAL unit type such as sequence parameter set (SPS), supplemental enhancement information (SEI), picture parameter set (PPS), and slice (SL). Of these, the SPS unit, the SEI unit, and the PPS unit are included in header information, The SL is included in compressed image data. In the H. 264 standard, the NAL unit may lie midway in the compressed image data as the header information. In the figure, a PPS unit lies between slice units.

FIG. 2B is a diagram illustrating timing for conventional header analysis and decoding process. As shown in the figure, various parameters extracted by the header analysis are necessary for a subsequent decoding process, the header analysis and the decoding process are sequentially performed by the header analysis unit 910 and the decoding unit 911, respectively. As a result, there arises a problem that waiting periods occur in places of both of the header analysis unit 910 and the decoding unit 911, and a processing period for decoding is extended.

The same problem arises when 2-channel streams are simultaneously decoded.

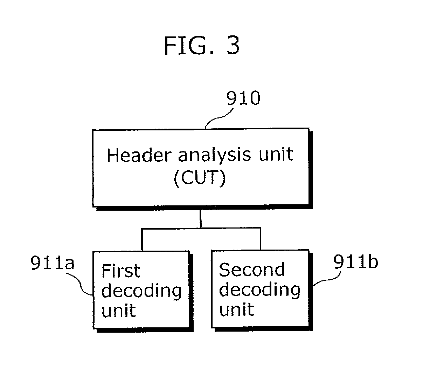

FIG. 3 is a block diagram illustrating a structure of a conventional moving picture decoding device corresponding to two streams. The figure is equivalent to the postprocessing unit 904 in FIG. 1. The header analysis unit 910 is commonly used for header analysis of the 2-channel streams. Decoding units 911a and 911b each correspond to a 1-channel stream.

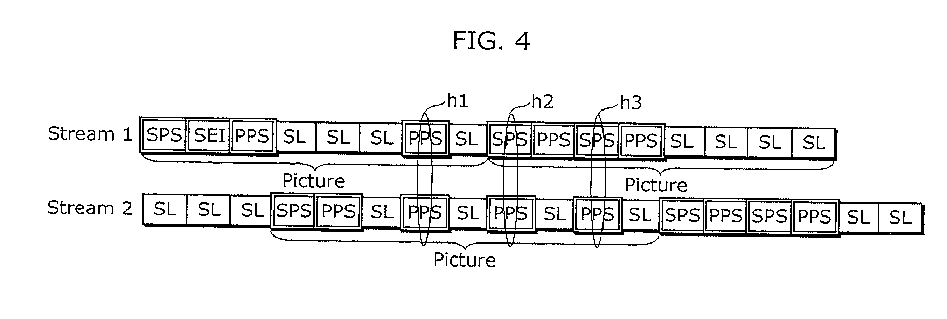

FIG. 4 is a diagram illustrating an example of 2-channel streams. As shown in the figure, since PPS units lie midway between slice units, there is a case where NAL units as header information from the 2-channel streams overlap with each other at the same timing (h1 to h3 in the figure),

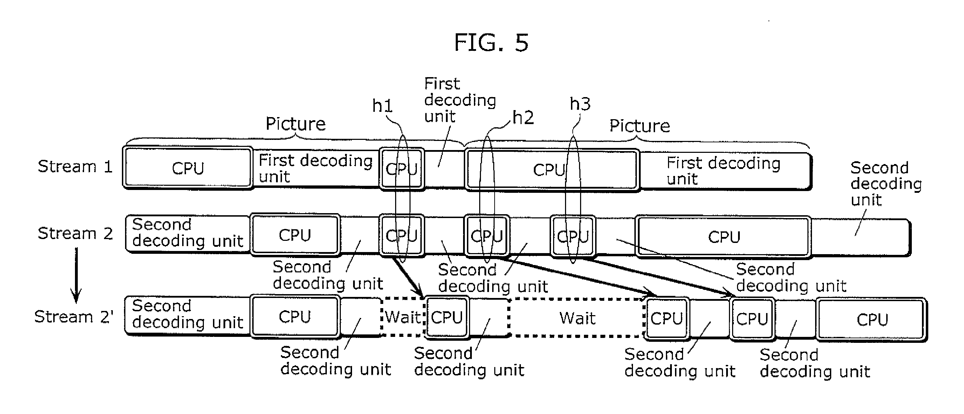

FIG. 5 is a diagram illustrating timing for a header analysis and a decoding process of the 2-channel streams shown in FIG. 4. A CPU in the figure denotes the header analysis unit 910. In the case where NAL units as header information of a stream 1 and a stream 2 overlap with each other at the same timing, since the CPU for common use cannot perform the header analysis simultaneously, a waiting period occurs in one of the streams. As a result, the header analysis cannot be performed at the timing of the stream 1 and the stream 2 shown in the figure, the header analysis and the decoding process are to be performed at the timing of the stream 1 and a stream 2'. As stated above, even in the case where the header analysis unit 910 for common use is used to decode the 2-channel streams simultaneously, there is a problem that the waiting period occurs.

Furthermore, although providing two header analysis units (CPU) allows the header analysis to be performed on the stream 1 and the stream 2 at the same timing, there is a problem that an increase in circuit area invites higher costs.

The present invention has an objective for providing a moving picture decoding device, a video device, a semiconductor device, and a moving picture decoding method which reduce a waiting period occurring in a header analysis unit that analyzes header information and a decoding unit that decodes compressed image data and which shorten a processing period for decoding.

### Means to Solve the Problems

In order to solve the above problems, a moving picture decoding device according to the present invention is a moving picture decoding device which decodes a stream including header information and compressed image data and which includes: a determination unit configured to determine the header information and the compressed image data in the stream; a header information storage unit configured to temporarily store the header information determined by the determination unit; a header address storage unit configured to store a header end address indicating an end of header information in a picture, the header end address being an address of the header information storage unit; a compressed image storage unit configured to temporarily store the compressed image data determined by the determination unit; an image address storage unit configured to store an image end address indicating an end of compressed image data in the picture, the image end address being an address of the compressed image storage unit; a header analysis unit configured to analyze the header information for each picture, based on the header end address; and a decoding unit configured to decode the compressed image data for each picture, based on the image end address and a result of the analysis by the header analysis unit, wherein the header analysis unit is configured to analyze header information of a picture immediately after the picture being decoded by the decoding unit.

Here, the moving image picture decoding device may further include: a storage control unit configured to control the storage of the header information in the header information storage unit, the storage of the header end address in the header address storage unit, the storage of the compressed image data in the compressed image storage unit, and the storage of the image end address in the image address storage unit, based on a result of the determination by the determination unit; and a reading control unit configured to read the header information corresponding to the picture from the header information storage unit according to the header end address, provide the read header information to the header analysis unit, read the compressed image data corresponding to the picture from the compressed image storage unit according to the image end address, and provide the read compressed image data to the decoding unit. With this structure, header information and compressed image data are not stored in one buffer memory in an order of a sequence of the header information and the compressed image data in a stream, but are separately stored in the header information storage unit and the compressed image storage unit. As a result, it becomes possible to facilitate parallelization with a pipeline process and reduce a wait time because the header information and the compressed image data can be read without depending on the order of the sequence of the header information and the compressed image data in the stream.

Furthermore, the header end address and the image end address facilitate the reading without depending on the sequence of the header information and the compressed image data in the stream.

Here, the moving picture decoding device may further include: a division unit configured to divide a slice unit included in the compressed image data into a slice header and slice data; and a storage control unit configured to store the header information determined by the determination unit and the slice header generated through the division by the division unit in the header information storage unit, store the compressed image data and the slice data in the compressed image storage unit, and update the header address storage unit and the image address storage unit along with the storage of the header information and the slice header and the storage of the compressed image data and the slice data. With this structure, both of a slice header and slice data are not processed by the decoding unit, but the slice header is analyzed by the header analysis unit and the slice data is decoded by the decoding unit. In other words, since it is possible to analyze the slice header and perform the decoding process on the slice data with the pipeline process, it is possible to improve performance further.

Here, the determination unit may be further configured to determine header types in the header information; the header information storage unit may include storage regions each corresponding to one of the header types in the header information; and the moving picture decoding device may further include: a storage control unit configured to store a header having one of the header types determined by the determination unit in one of the storage regions corresponding to the header type of the header, and to store, in the header address storage unit, a header end address of the header in an end of a picture for each header type; and a reading control unit configured to read a header corresponding to the picture from the header information storage unit for each header type according to the header end address of each header type, provide the read header to the header analysis unit, read the compressed image data corresponding to the picture from the compressed image storage unit according to the image end address, and provide the read compressed image data to the decoding unit. With this structure, it becomes easy to omit a header analysis for a header having a header type unnecessary for the decoding process. For example, there are header types of headers that need no analyzing, depending on specifications of a video device including the moving picture decoding device or a situation of a decoding process required. Even a process for determining a header type of each of the headers having the unnecessary header type depending on the situation, and it is possible to perform simplification by skipping reading of a storage region corresponding to the header.

Here, the moving picture decoding device may further include: a detection unit configured to detect the end of the header information in the picture and the end of the compressed image data in the picture; and an adding unit configured to add an end mark to the detected end of the header information stored in the header information storage unit, and an end mark to the detected end of the compressed image data stored in the compressed image storage unit.

Here, the moving picture decoding device further may include: a detection unit configured to detect an end of an end header among headers having a same header type in the picture and the end of the compressed image data in the picture; and an adding unit configured to add, for each header type, an end mark to an end of header information having a same header information type in the picture for the header information stored in the header information storage unit, and an end mark to the end of the compressed image data stored in the compressed image storage unit.

Here, the adding unit may be further configured to add, for each header type, an end mark to an end of header information having a same header information type in the picture for the header information stored in said header information storage unit, and an end mark to the end of the compressed image data stored in said compressed image storage unit. With this structure, as an end mark is added to an end of header information in a picture and an end mark is added to an end of compressed image data in the picture, it is not always necessary to check an end of the picture by address comparison, and it is possible to continue a header analysis and a decoding process until the end marks are sequentially read from the header information storage unit and the compressed image storage unit. This allows a processing load to be reduced and a processing efficiency to be improved.

Here, the determination unit may be configured to determine header information and compressed image data in each of plural channel streams, and the moving picture decoding device may further include: a detection unit configured to detect an end of header information in a picture and an end of compressed image data in the picture; a judgment unit configured to judge whether or not a current picture and a picture immediately after the current picture each belong to a different stream, the current picture and the picture being determined by the determination unit; and an adding unit configured to add: a mark indicating a change of channel to the detected end of the header information stored in the header information storage unit; and a mark indicating a change of channel to the detected end of the compressed image data stored in the compressed image storage unit, in the case where it is judged that the current picture and the picture each belong to the different stream.

Here, the determination unit may be configured to determine header information and compressed image data in each of plural channel streams, and the moving picture decoding device may further include: a detection unit configured to detect an end of an end header among headers having a same header type in the picture and the end of the compressed image data in the picture; a judgment unit configured to judge whether or not a current picture and a picture immediately after the current picture each belong to a different stream; and an adding unit configured to add, for each header type, a mark indicating a change of channel to an end of header information having a same header information type in the picture for the header information stored in the header information storage unit in the case where it is judged that the current picture and the picture each belong to the different stream, and a mark indicating a change of channel to the end of the compressed image data in the picture for the compressed image data stored in the compressed image storage unit. With this structure, because a mark indicating a channel on a picture basis is added in the compressed image storage unit and the header information storage unit, the compressed image storage unit is shared by two streams and the header information storage unit is shared by 2-channel streams, Consequently, it is possible to perform decoding while switching between the two streams at least as the picture basis.

Here, the determination unit may be configured to determine header information and compressed image data in each of plural channel streams; and the header information storage unit, the header address storage unit, the compressed image storage unit, and the image address storage unit may include storage regions each corresponding to the plural channels; the moving picture decoding device may further include detection units and adding units, which correspond to the plural channels; each detection unit may be configured to detect, in a corresponding channel stream, the end of the header information in the picture and the end of the compressed image data in the picture; and each adding unit may be configured to add an end mark to the detected end of the header information stored in a storage region corresponding to the channel stream, and an end mark to the detected end of the compressed image data stored in a storage region corresponding to the channel stream. With this structure, it is possible to switch between decoding processes for plural channel streams on a picture basis.

Here, the moving picture decoding device may further include a slice determination unit configured to determine a start slice included in the picture, wherein the adding unit may be further configured to add, to the header information stored in the header information storage unit, a start mark indicating appearance of the start slice when the start slice is determined. With this structure, it is possible to start a decoding process for a start slice unit before analysis of all header information in a picture is completed in the case where slice units lie midway in the header information in a stream.

Here, the moving picture decoding device may further include: a temporary storage unit configured to temporarily store a stream inputted from outside, wherein the determination unit may include: an arithmetic decoding unit configured to perform, as preprocessing, arithmetic decoding on the stream stored by the temporary storage unit; and a determination unit configured to determine header information and compressed image data in the arithmetically decoded stream. With this structure, the determination unit performs arithmetic decoding as preprocessing, and the header analysis unit and the decoding unit perform a header analysis and a decoding process as postprocessing. Accordingly, it is possible to perform a two-stag moving picture decoding process efficiently.

Moreover, the semiconductor device, the video device, and the moving picture decoding method according to the present invention include the same structures, operations, and effects as described above.

### Effects of the Invention

According to the present invention, it is possible to read header information and compressed image data without depending on a sequence of the header information and the compressed image data in a stream, to facilitate parallel processing with a pipeline process, and to reduce a waiting period.

Moreover, since it is possible to analyze a slice header and perform the decoding process on slice data with the pipeline process, it is possible to improve performance.

Further, it is possible to easily skip reading a header having an unnecessary header type depending on a situation without performing a process of determining a header type individually, and to improve a processing efficiency by reducing a processing load.

In addition, it is possible to easily determine an end of a picture, a start position of the first slice, and a switching position of streams at the time of the header analysis and the decoding process.

### Brief Description of Drawings

[FIG. 1] FIG. 1 is a block diagram illustrating a structure of a conventional moving picture decoding device.
[FIG. 2A] FIG. 2A is a schematic diagram of an example of a stream.
[FIG. 2B] FIG. 2B is a diagram illustrating timing for conventional header analysis and decoding process,
[FIG. 3] FIG. 3 is a block diagram illustrating a structure of a conventional moving picture decoding device corresponding to two streams.
[FIG. 4] FIG. 4 is a diagram illustrating an example of 2-channel streams.
[FIG. 5] FIG. 5 is a diagram illustrating timing for a header analysis and a decoding process of 2-channel streams.
[FIG. 6] FIG. 6 is a block diagram illustrating a structure of a moving picture decoding device according to an embodiment 1,
[FIG. 7] FIG. 7 is a schematic diagram illustrating simplified operations of the moving picture decoding device.
[FIG. 8] FIG. 8 is a flow chart illustrating storage control for a second buffer memory.
[FIG. 9] FIG. 9 is a block diagram illustrating a structure of a moving picture decoding device according to an embodiment 2.
[FIG. 10] FIG. 10 is a schematic diagram illustrating operations of the moving picture decoding device.
[FIG. 11] FIG. 11 is a block diagram illustrating a structure of a moving picture decoding device according to an embodiment 3.
[FIG. 12] FIG. 12 is a block diagram illustrating a structural example of a header information storage unit.
[FIG. 13] FIG. 13 is a block diagram illustrating a structure of an HEA storage unit.
[FIG. 14] FIG. 14 is a schematic diagram illustrating simplified operations of the moving picture decoding device.
[FIG. 15] FIG. 15 is a flow chart illustrating storage control processing for a second buffer memory.
[FIG. 16] FIG. 16 is a flow chart illustrating reading control processing of the header information storage unit 151 in a reading control unit.
[FIG. 17] FIG. 17 is a block diagram illustrating a structure of a moving picture decoding device according to an embodiment 4.
[FIG. 18] FIG. 18 is a schematic diagram of a stream, to which end marks are added, in a header information storage unit.
[FIG. 19] FIG. 19 is a block diagram illustrating a structure of a moving picture decoding device according to an embodiment 5.
[FIG. 20] FIG. 20 is a schematic diagram of a stream, to which end marks are added, in a header information storage unit.
[FIG. 21] FIG. 21 is a schematic diagram illustrating a decoding operation of two streams in the moving picture decoding device.
[FIG. 22] FIG. 22 is a block diagram illustrating a structure of a moving picture decoding device according to an embodiment 6.
[FIG. 23] FIG. 23 is a schematic diagram illustrating simplified operations of the moving picture decoding device.
[FIG. 24] FIG. 24 is a diagram illustrating a specific example of a stream stored in a second buffer memory.
[FIG. 25] FIG. 25 is a diagram illustrating a structure of a video device according to an embodiment 7 which includes a moving picture decoding device.

### Numerical References

- 11: Double tuner
- 12: Stream input control unit
- 13: Moving picture decoding device
- 14: Output control unit
- 15: Display device
- 16: Display device
- 110, 111: First buffer memory
- 120, 121: First decoder
- 125: Division unit
- 130, 131: Storage control unit
- 140, 141: Second buffer memory
- 150, 151: Header information storage unit
- 160, 161: HEA storage unit
- 170: Compressed image storage unit
- 180: DEA storage unit
- 190, 191: Reading control unit
- 200: Second decoder
- 210: Header analysis unit
- 220: Decoding unit
- 230: Picture end determination unit
- 240: NAL end adding unit
- 250: Channel determination unit
- 260: CH end adding unit
- 270: First SL determination unit
- 280: SLstart adding unit

### Best Mode for Carrying Out the Invention

### (Embodiment 1)

A moving picture decoding device according to an embodiment 1 determines header information and compressed image data in a stream, and stores the determined header information in a header information storage unit and the determined compressed image data in a compressed image storage unit. This allows the header information and the compressed image information to be read without depending on a sequence in the stream, Consequently, it is possible to facilitate parallel processing of the header information in the header information storage unit and the compressed image data in the compressed image storage unit, and to reduce a waiting period.

In addition, the moving picture decoding device includes a header address storage unit and an image address storage unit. The header address storage unit stores a header end address indicating an end of header information in a picture, the header end address being an address in the header information storage unit. The image address storage unit stores an image end address indicating an end of compressed image data in a picture, the image end address being an address in the compressed image storage unit. The header end address and the image end address facilitate reading without a sequence of header information and compressed image information in a stream.

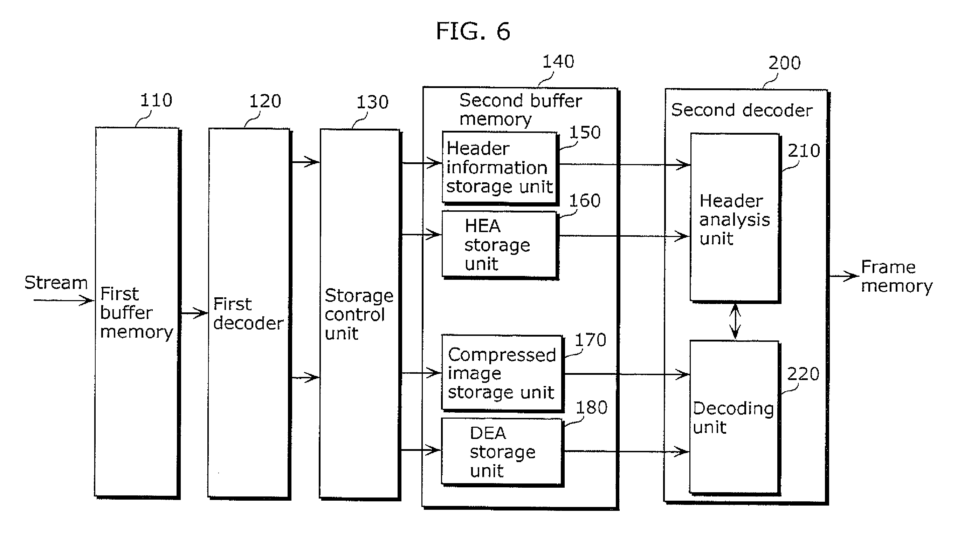

FIG. 6 is a block diagram illustrating a structure of a moving picture decoding device according to the embodiment 1. The moving picture decoding device in the figure includes a first buffer memory 110, a first decoder 120, a storage control unit 130, a second buffer memory 140, and a second decoder 200, and decodes a stream in two steps consisting of preprocessing by the first decoder 120 and postprocessing by the second decoder 200. In addition, the second buffer memory 140 includes a header information storage unit 150, a header end address (hereinafter, abbreviated as HEA) storage unit 160, a compressed image storage unit 170, and a compressed image data end address (hereinafter, abbreviated as DEA) storage unit 180.

The first buffer memory 110 is a buffer memory which temporary stores a stream which contains header information and compressed image data and to which CABAC is used. As a matter of course, a stream to which CAVLC instead of CABAC is used may be inputted to the first buffer memory 110.

The first decoder 120 performs context-adaptive binary arithmetic decoding (CABAD) on the stream stored in the first buffer memory 110. The first decoder 120 also has a function as a determination unit. That is to say, the header information and the compressed image data included in the stream to which the CABAC is used are determined.

Based on a result of the determination by the first decoder 120, the storage control unit 130 controls storage of the header information in the header information storage unit, storage of the header end address in the HEA storage unit 160, storage of the compressed image data in the compressed image storage unit 170, and storage of the image end address in the DEA storage unit 180.

The second buffer memory 140 includes the header information storage unit 150 and the compressed image storage unit 170 as regions to separately store the header information and the compressed image data in the stream. In addition, the second buffer memory 140 includes the HEA storage unit 160 and the DEA storage unit 180 as regions to manage those addresses.

The storage control unit 130 controls the header information storage unit 150 to temporarily store the header information.

The storage control unit 130 controls the HEA storage unit 160 to store a header end address indicating an end of header information in a picture, the header end address being an address of the header information storage unit 150.

The storage control unit 130 controls the compressed image storage unit 170 to temporarily store the compressed image data.

The storage control unit 130 controls the DEA storage unit 180 to store an image end address indicating an end of compressed image data in the picture, the image end address being an address in the compressed image storage unit 170.

The second decoder 200 includes a header analysis unit 210 and a decoding unit 220. The second decoder 200 reads the header information corresponding to the picture from the header information storage unit 150 based on the header end address, and provides the read header information to the header analysis unit 210. In addition, the second decoder 200 reads the compressed image data corresponding to the picture from the compressed image storage unit 170 based on the image end address, and provides the read compressed image data to the decoding unit 220.

The header analysis unit 210 extracts various parameters by analyzing, for each picture, the header information in the stream stored in the header information storage unit 150.

Based on the various parameters extracted by the header analysis unit 210, the decoding unit 220 performs an inverse quantization process, an inverse orthogonal transformation process, motion compensation, and filtering. A picture decoded in this manner is outputted to a frame memory 905.

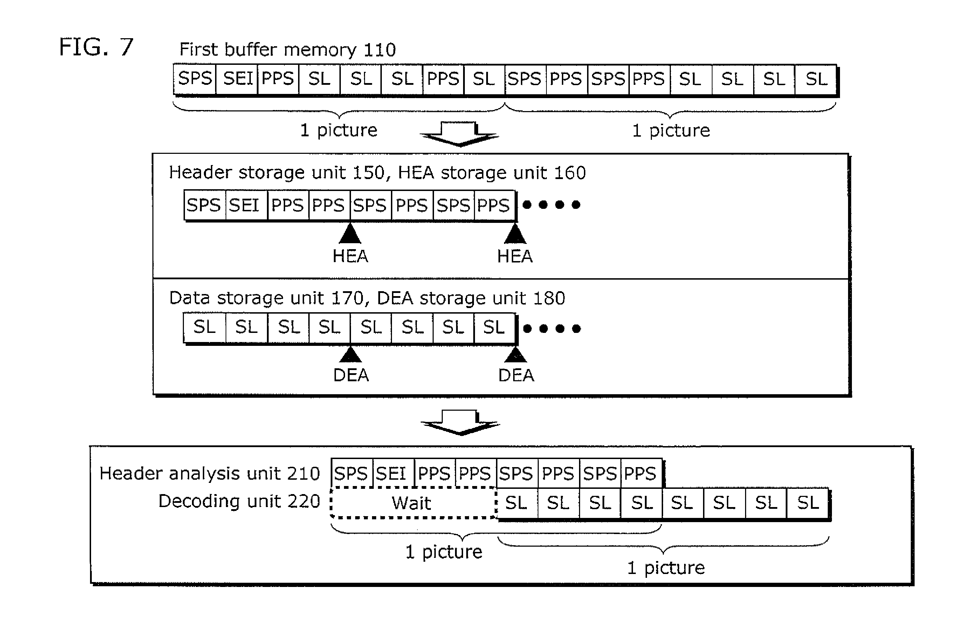

FIG. 7 is a schematic diagram illustrating simplified operations of the moving picture decoding device.

The upper row in the figure illustrates an example of a stream in the first buffer memory 110. In the H. 264 standard, a stream can be considered as a set of units each of which is referred to as a network abstraction layer (NAL) unit. The NAL unit includes unit types such as sequence parameter set (SPS), supplemental enhancement information (SEI), picture parameter set (PPS), and slice (SL). Of these, the SPS unit, the SEI unit, and the PPS unit are included in header information. The SL unit is included in compressed image data. In the H. 264 standard, the NAL unit may lie midway in the compressed image data (slices) as the header information. In the figure, a PPS unit lies between slice units.

The middle row in the figure illustrates that the header information and the compressed image data in the stream shown by the upper row in the figure are separately stored in the second buffer memory 140.

The header information storage unit 150 stores NAL units consisting of header information such as SPS, SEI, and PPS. A header end address (HEA) is stored in the HEA storage unit 160, and indicates an end of the header information in a picture.

The compressed image storage unit 170 stores SL units as NAL units consisting of compressed image data. An image end address (DEA) is stored in the DEA storage unit 180, and indicates an end of the compressed image data in the picture.

The bottom row in the figure illustrates a processing procedure of the header analysis unit 210 and the decoding unit 220 for the header information and the compressed image data shown by the middle row in the figure. When the header analysis unit 210 completes a header analysis of four NAL units (SPS, SEI, PPS, and PPS) in the first picture, the decoding unit 220 performs a decoding process on compressed image data (four SL units) in the first picture using various parameters obtained as a result of the analysis.

The header analysis unit 210 performs a header analysis process on a picture immediately after the first picture in parallel with the decoding process being performed on the first picture by the decoding unit 220.

As stated above, since the header analysis unit 210 and the decoding unit 220 perform the header analysis and the image decoding process in parallel as a pipeline process, it is possible to reduce a waiting period for processing.

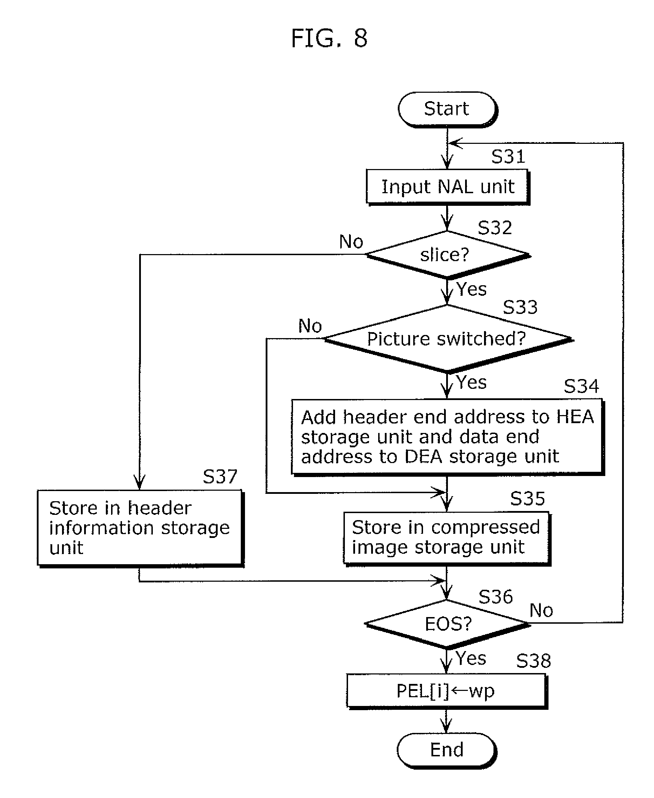

FIG. 8 is a flow chart illustrating storage control for the second buffer memory 140. The figure illustrates processes performed every time the first decoder 120 inputs a NAL unit to the storage control unit 130. In the figure, the first decoder 120 determines whether or not the NAL unit is a slice (whether the NAL unit is compressed image data or header information) (S32), whether or not a picture is switched (whether or not the NAL unit is a NAL unit at the end of the picture) (S33), and whether or not the NAL unit is at the end of a stream (EOS) (whether or not the NAL unit is a NAL unit at the end of the picture) (S36). After the first decoder 120 inputs the NAL unit to the storage control unit 130, based on a result of the above determination, the storage control unit 130 stores: the NAL unit in the header information storage unit when the NAL unit is not a slice (SL unit) (from S32 to S37); the NAL unit in the compressed image storage unit 170 when the NAL unit is the slice (SL unit); and the HEA in the HEA storage unit 160 and the DEA in the DEA storage unit 180 when the picture is switched. In addition, the storage control unit 130 updates respective write pointers (wp) of the header information storage unit 150 and the compressed image storage unit 170 for a next new picture when the NAL unit is at the EOS (the NAL unit at the end of the picture).

As described above, the moving picture decoding device according to the embodiment 1 can read the header information and the compressed image information without depending on the sequence in the stream. Consequently, it is possible to facilitate the parallel processing of the header information in the header information storage unit and the compressed image data in the compressed image storage unit with the pipeline process, and to reduce a waiting period. In addition, the header end address and the image end address facilitate the reading without depending on the sequence of the header information and the compressed image data in the stream.

### (Embodiment 2)

A moving picture decoding device according to an embodiment 2 divides a slice unit in compressed image data into a slice header and slice data, and stores the slice header in a header information storage unit, just like other header information, and the slice data in a compressed image storage unit as the compressed image data, in addition to the moving picture decoding device according to the embodiment 1. This does not mean that a decoding unit processes both of the slice header and the slice data but that the header analysis unit analyzes the slice header and the decoding unit decodes the slice data. That is to say, since it is possible to analyze the slice header and perform the decoding process on the slice data with a pipeline process, it is possible to improve performance further.

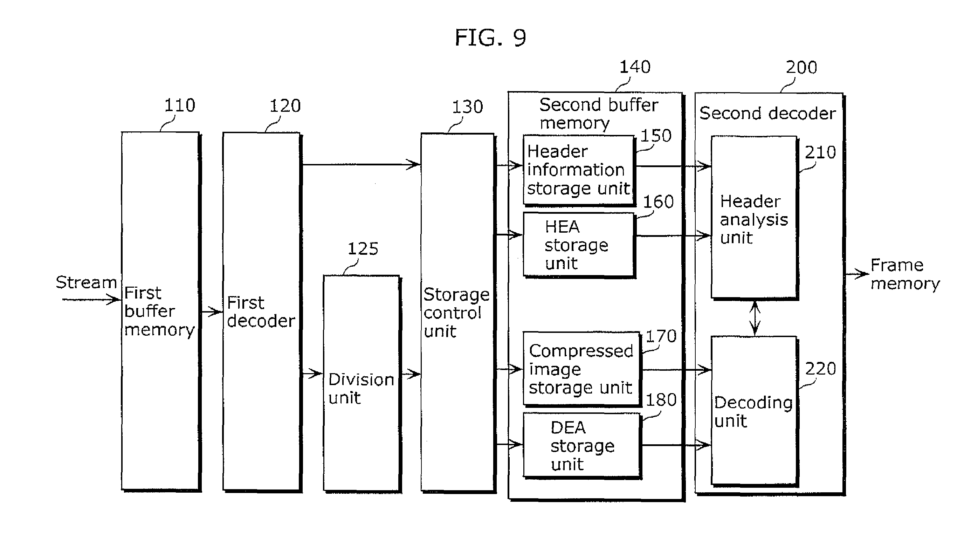

FIG. 9 is a block diagram illustrating a structure of the moving picture decoding device according to the embodiment 2. In comparison to the moving picture decoding device in FIG. 6, the moving picture decoding device in the figure mainly differs in that a division unit 125 is added. Since the similar elements are indicated by the same reference numerals, the following omits describing the same point and mostly describes the difference.

The first decoder 120 inputs a slice unit to the division unit 125, and the division unit 125 divides the slice unit into a slice header and slice data and outputs the slice header and the slice data to the storage control unit 130.

The storage control unit 130 stores the slice header from the division unit 125 in the header information storage unit 150, just like other header information, and the slice data in the compressed image storage unit 170 as compressed image data. This allows the slice header and the slice data to be separately stored in the second buffer memory 140.

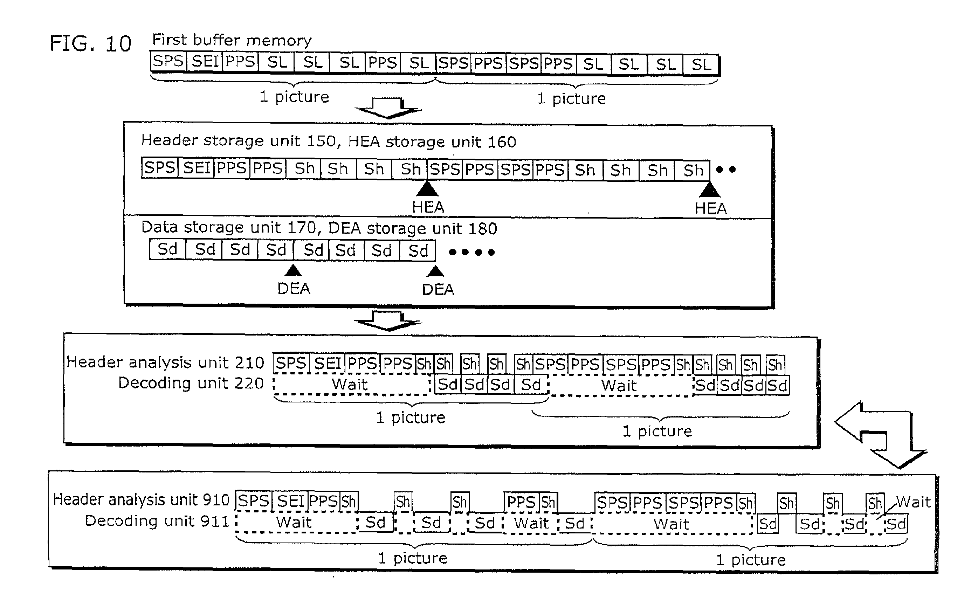

FIG. 10 is a schematic diagram illustrating operations of the moving picture decoding device.

The first row from the top of FIG. 10 illustrates an example of a stream in the first buffer memory 110, and the description is omitted since it has been illustrated by the upper row in FIG. 7.

In the second row from the top of FIG. 10, SL denotes a slice unit before division, Sh a slice header after the division by the division unit 125, and Sd slice data after the division by the division unit 125. The slice header Sh is also stored in the header information storage unit 150, A header end address (HEA) in the HEA storage unit 160 indicates an end of header information including the slice header Sh for a picture. The slice data Sd excluding the slice header Sh is stored in the compressed image storage unit 170. A DEA in the DEA storage unit 180 indicates end slice data Sd for a picture.

The third row from the top of FIG. 10 illustrates a processing procedure of the header analysis unit 210 and the decoding unit 220 for the header information and the compressed image data shown by the second row. The pipeline process promotes further parallel processing of an analytical process of a slice header by the header analysis unit 210 and a decoding process of slice data by the decoding unit 220.

As described above, since the moving picture decoding device according to the embodiment 2 can analyze the slice header and perform the decoding process on the slice data with the pipeline process, it is possible to improve the performance further.

### (Embodiment 3)

A moving picture decoding device according to an embodiment 3 separately stores a NAL unit for each header type (that is, NAL unit type) included in header information, in addition to the moving picture decoding device according to the embodiment 1. Further, the moving picture decoding device according to the embodiment 3 determines the NAL unit type and stores the NAL unit in a storage region corresponding to the determined type. In addition, an end address of an end NAL unit in a picture is stored, for each header type, in a header end address storage unit. It becomes easy to omit a header analysis for a header type unnecessary for the decoding process.

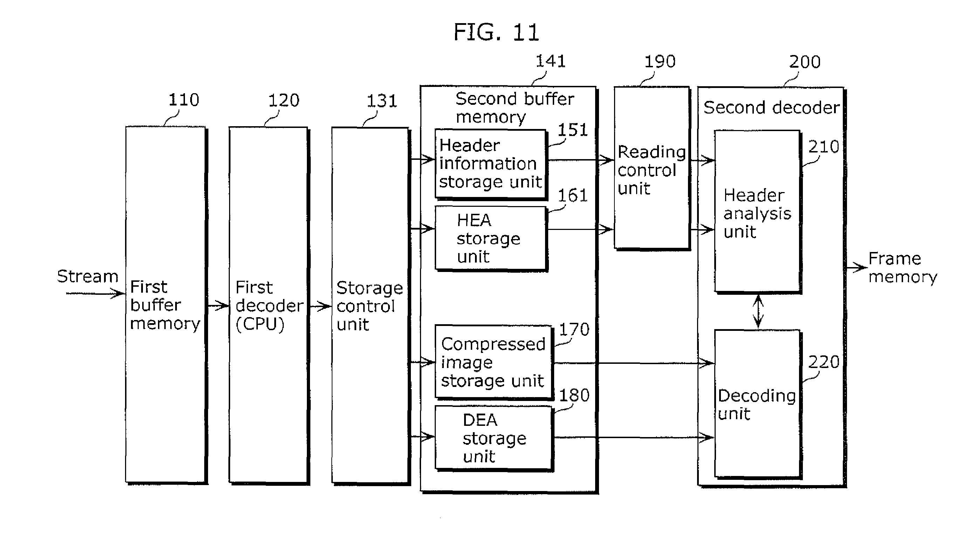

FIG. 11 is a block diagram illustrating a structure of the moving picture decoding device according to the embodiment 3. In comparison to the moving picture decoding device in FIG. 6, the moving picture decoding device in the figure mainly differs in that a storage control unit 131 instead of the storage control unit 130 and a second buffer memory 141 instead of the second buffer memory 140 are included. In addition, in comparison to the second buffer memory 140, the second buffer memory 141 includes a header information storage unit 151 instead of the header information storage unit 150 and an HEA storage unit 161 instead of the HEA storage unit 160. Since the similar elements are indicated by the same reference numerals, the following omits describing the same point and mostly describes the difference.

The second buffer memory 141 is designed to store a NAL unit in a storage region corresponding to a NAL unit type of the NAL unit.

The header information storage unit 151 includes as many storage regions as the number of NAL unit types.

The HEA storage unit 161 includes as many HEAs as the number of the NAL unit types.

Based on a header type (that is, a NAL unit type) of a NAL unit inputted by the first decoder 120, the storage control unit 131 stores the NAL unit in a storage region corresponding to the header type of the NAL unit among storage regions of the header information storage unit 151. Further, the storage control unit 131 stores, for each NAL unit type, a header end address (HEA) in the HEA storage unit 161. Except this, the same is true for the storage control unit 130.

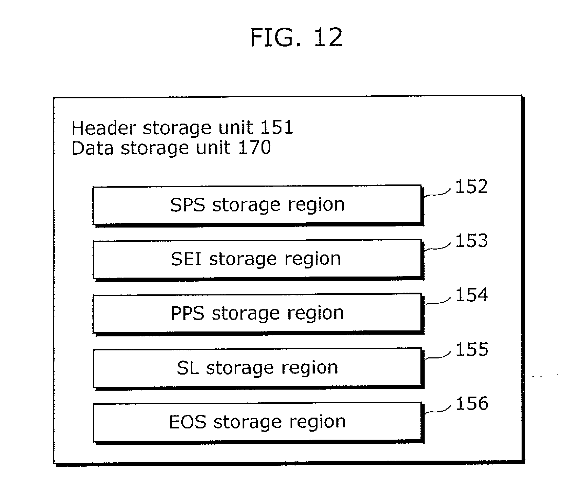

FIG. 12 is a block diagram illustrating a structural example of the header information storage unit 151. The header information storage unit 151 includes storage regions each corresponding to one of header types included in header information. In the figure, the compressed image storage unit 170 is also illustrated. In the figure, the header information storage unit 151 includes a SPS storage region 152, a SEI storage region 153, and a PPS storage region 154. As stated above, the header information storage unit 151 includes a storage region for each NAL unit type, and stores a NAL unit having the same NAL unit type in each storage region. In addition, the compressed image storage unit 170 includes a SL storage region 155 and an EOS storage region 156.

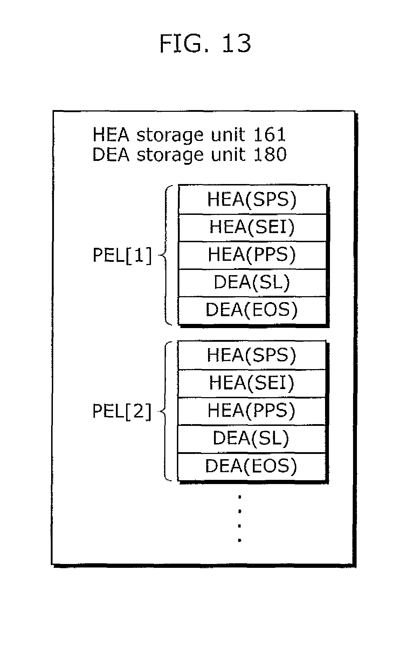

FIG. 13 is a block diagram illustrating a structure of the HEA storage unit 161. In the figure, the compressed image storage unit 180 is also illustrated. In the figure, an HEA (SPS) is an end address of the end SPS in a picture stored in the SPS storage region 152, and used as a write pointer (wp) for SPS. The same is true for an HEA (SEI), an HEA (PPS), a DEA (SL), and a DEA (EOS), except that a corresponding storage region differs for each of them. The DEA (EOS) indicates an end NAL unit in a stream or a sequence. In addition, PEL[1] is a picture end list corresponding to a picture.

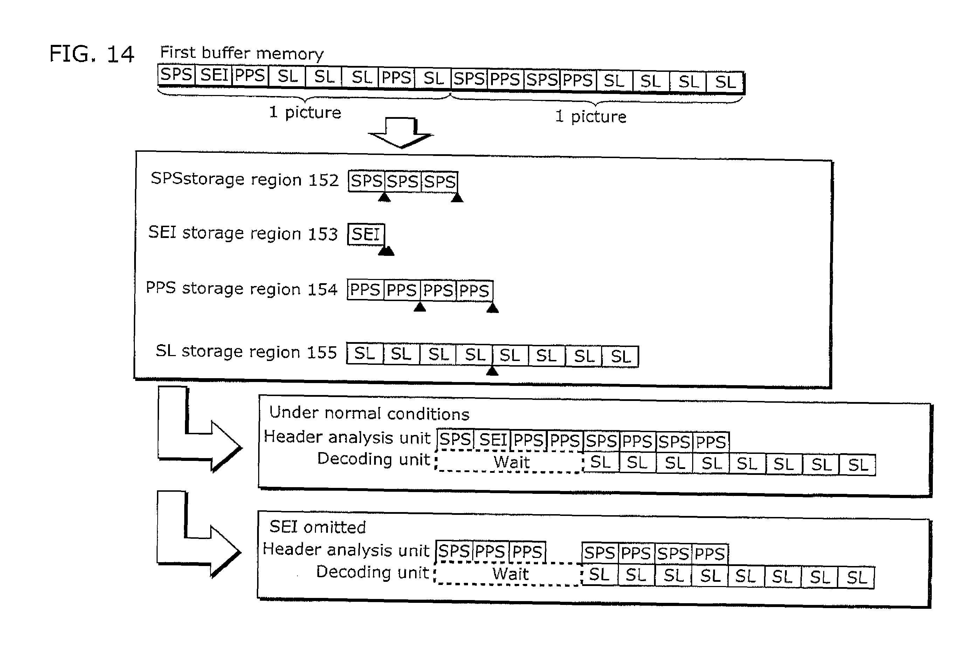

FIG. 14 is a schematic diagram illustrating simplified operations of the moving picture decoding device.

Since the first row from the top of FIG. 14 illustrates the same example of the stream as shown by the upper row in FIG. 7, the description is omitted.

The second row from the top of FIG. 14 illustrates that NAL units consisting of the stream shown by the first row of FIG. 14 are stored in the header information storage unit 151,

The third and fourth rows from the top of FIG. 14 each illustrate the header analysis and the decoding process that are switchable by the moving picture decoding device. The third row illustrates the same process as shown by the bottom row in FIG. 7. The fourth row illustrates a process in which reading SEI is omitted. There are header types that need no analysis depending on specifications of a video device including the moving picture decoding device and a situation of a decoding process requested. Although a process of determining individual header (NAL unit) type is necessary to skip reading the SEMI as shown by the middle row in FIG. 7, it becomes possible to simplify a reading process since it is only necessary to skip reading the SEI storage region as shown by the second row from the top of FIG. 14.

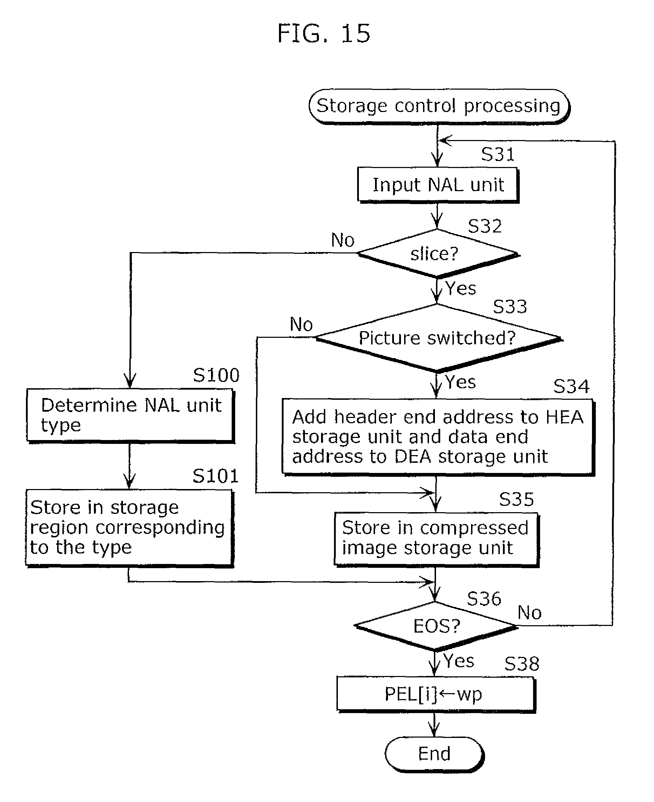

FIG. 15 is a flow chart illustrating storage control processing for the second buffer memory 141. In comparison to FIG. 8, the figure differs in that there are steps S100 and S101 instead of the step S37. The following omits describing the same point and mostly describes the difference. In the case where a NAL unit inputted to the storage control unit 131 by the first decoder 120 is not a slice unit, the NAL unit is stored in a storage region corresponding to a NAL unit type of the NAL unit determined by the first decoder 120 (S100 and S101). It is to be noted that it is necessary to manage a write pointer (wp) of the header information storage unit 151 for each storage region.

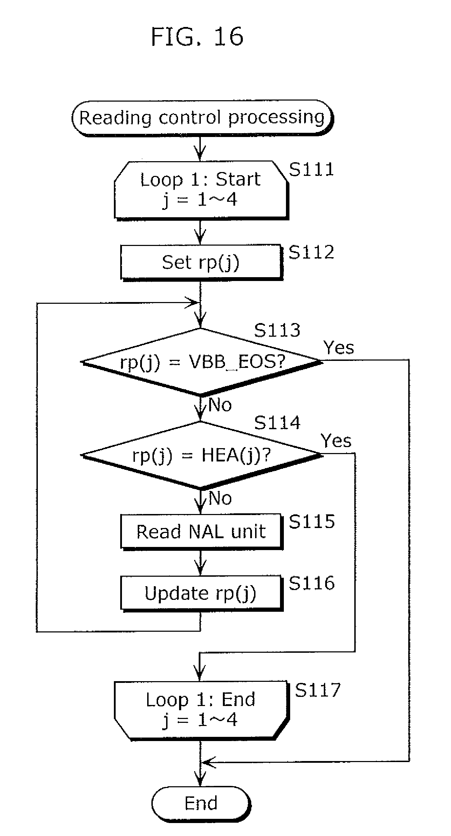

FIG. 16 is a flow chart illustrating reading control processing of the header information storage unit 151 in a reading control unit. In the figure, rp(j) indicates a read pointer for each storage region in the header information storage unit 151. HEA(j) indicates an header end address for each storage region in the header information storage unit 151. j=1, 2, 3, 4 corresponds to the SPS storage region 152, the SEI storage region 153, the PPS storage region 154, and the SL storage region 155. In a loop 1 shown in the figure, after HEA (j) of an immediately previous picture is set as rp (j) (S112), the reading control processing is repeated until the rp (j) reaches HEA (j) of a current picture (S113 to S116).

In FIG. 16, in order to perform reading shown by the third row in FIG, 14 (regular reading without omission), it is only necessary to set control variable j=1, 2, 3, 4 of the loop 1. In addition, in order to perform reading shown by the fourth row in FIG. 14 (reading with SEI being omitted), it is only necessary to set control variable j=1, 3, 4 of the loop 1.

As described above, since the moving picture decoding device according to the embodiment 3 stores the NAL unit in the storage region for each NAL unit type, it is possible to easily omit the header analysis of the header type unnecessary for the decoding process.

### (Embodiment 4)

A moving picture decoding device according to an embodiment 4 adds an end mark indicating an end of an end NAL unit among NAL units having the same NAL unit type in a picture to headers each corresponding to one of header types (NAL unit type) stored in a header information storage unit and compressed image data stored in a compressed image storage unit, in addition to the moving picture decoding device according to the embodiment 3. Since an end mark is added to the header information and the compressed image data respectively, it is not necessary to check by address comparison whether or not a NAL unit is the end NAL unit among the NAL units having the same NAL unit type in the picture, and it is possible to continue a header analysis and a decoding process until the end marks are sequentially read from the header information storage unit and the compressed image storage unit. This allows a processing load to be reduced and a processing efficiency to be improved.

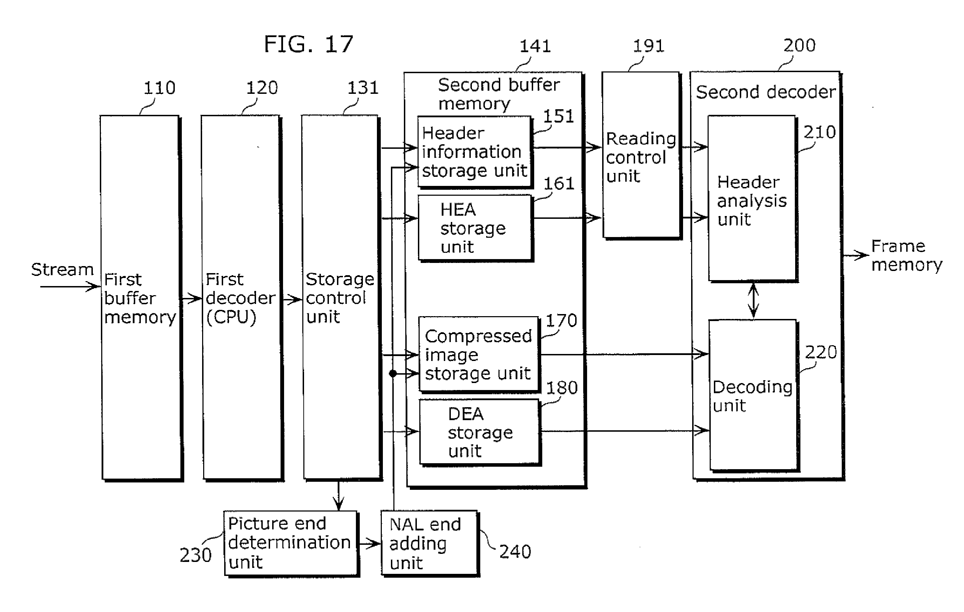

FIG. 17 is a block diagram illustrating a structure of the moving picture decoding device according to the embodiment 4. In comparison to the moving picture decoding device in FIG. 11, the moving picture decoding device in the figure differs in that a picture end determination unit 230 and a NAL end adding unit 240 are included and that a reading control unit 191 instead of the reading control unit 190 is included. Since the similar elements are indicated by the same reference numerals, the following omits describing the same point and mostly describes the difference.

The picture end determination unit 230 determines, for each NAL unit having a NAL unit type, whether or not a NAL unit having a NAL unit type is an end NAL unit in a picture. To put it differently, the picture end determination unit 230 detects an end of an end NAL unit among NAL units having the same NAL unit type in the picture.

In the case where the end of the end NAL unit among the NAL units having the same NAL unit type in the picture is detected, the NAL end adding unit 240 adds an end mark to the end NAL unit stored in the header information storage unit 151.

The reading control unit 191 does not need to always check by address comparison an end of header information in a picture or an end of compressed image data in a picture, and sequentially reads NAL units from the header information storage unit 151 and the compressed image storage unit 170 until the NAL unit to which the end mark is added is read.

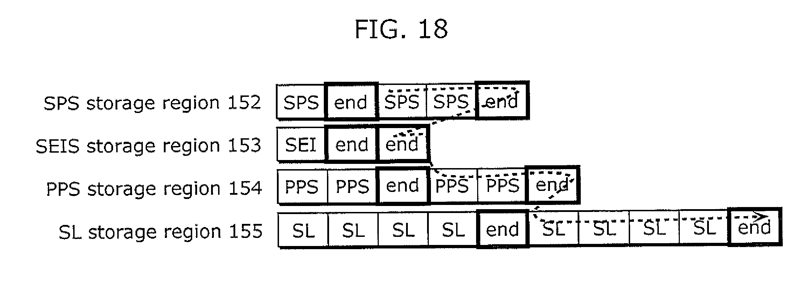

FIG. 18 is a schematic diagram of a stream, to which end marks are added, in the header information storage unit 151. In the figure, "end" denotes an end mark. As shown in the figure, each end mark indicates an end NAL unit among NAL units having the same NAL unit type in a picture for the respective storage regions 152 to 155 each corresponding to one of the NAL unit types.

As described above, the moving picture decoding device according to the embodiment 4 does not need to check by address comparison the end of the header information in the picture or the end of the compressed image data in the picture, and can sequentially read the NAL units from the header information storage unit 151 and the compressed image storage unit 170 until the NAL unit to which the end mark is added is read for each NAL unit type, and efficiently perform the reading of the header information storage unit 151.

### (Embodiment 5)

An embodiment 5 describes a moving picture decoding device which decodes multiple-channel streams. In the case where a current picture and a picture immediately after the current picture each belong to a different stream, the moving picture decoding device according to the embodiment 5 adds, for each header type (NAL unit type), a channel mark indicating a change of channel to an end of header information of the same header information type in a picture for header information stored in a header information storage unit, and a channel mark indicating a change of channel to an end of compressed image data in the picture for compressed image data stored in a compressed image storage unit, in addition to the moving picture decoding device according to the embodiment 4. Although the channel mark indicates an end of an end header among headers having the same header type in the picture, rather it indicates the end of the end header among the headers having the same header type in the current stream. In the case where various NAL units of different streams are stored in the header information storage unit, the moving picture decoding device can easily determine such NAL units with a light processing load, using the channel mark.

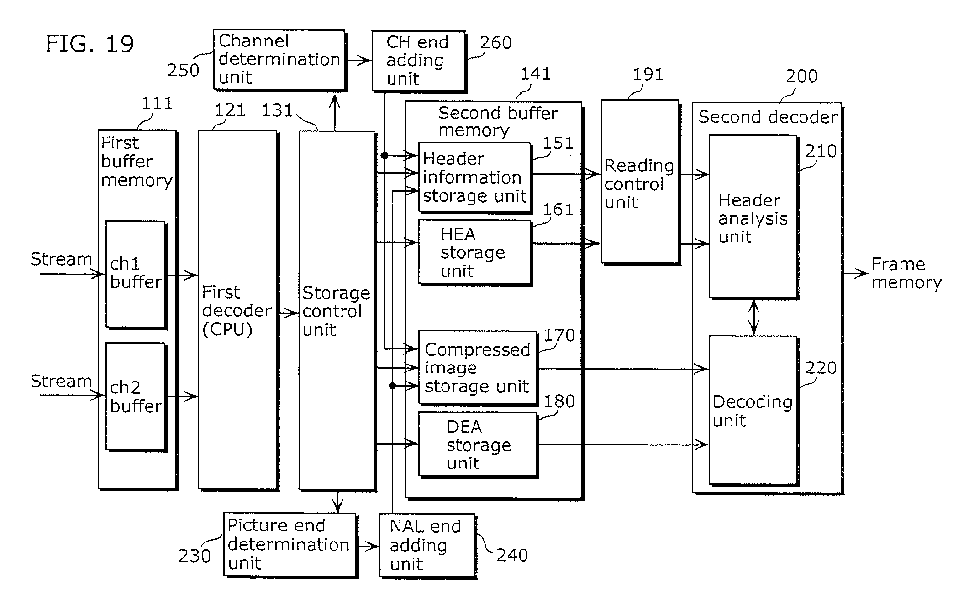

FIG. 19 is a block diagram illustrating a structure of the moving picture decoding device according to the embodiment 5. In comparison to the moving picture decoding device in FIG. 17, the moving picture decoding device in the figure differs in that a first buffer memory 111 instead of the first buffer memory 110 and a first decoder 121 instead of the first decoder 120 are included and that a channel determination unit 250 and a CH end adding unit 260 are included. Since the similar elements are indicated by the same reference numerals, the following omits describing the same point and mostly describes the difference.

2-channel streams are inputted to the first buffer memory 111. Accordingly, the first buffer memory 111 divides an internal storage region into a ch1 buffer and a ch2 buffer.

The first decoder 121 performs context-adaptive binary arithmetic decoding (CABAD) on the 2-channel streams and a determination process on header information and compressed image data, For instance, the first decoder 121 reads a stream by switching between the ch1 buffer and the ch2 buffer for each picture or every few pictures basis,

The channel determination unit 250 detects an end of an end header (that is, NAL unit) among headers having the same header type in a picture and an end of compressed image data (slice unit) in the picture, and also determines whether or not a current picture and a picture immediately after the current picture each belong to a different stream.

In the case where it is determined that the current picture and the picture immediately after the current picture each belong to the different stream, the CH end adding unit 260 adds, for each header (NAL unit) type, a channel mark indicating a change of channel to the end NAL unit among the NAL units having the same NAL unit type in the picture for the header information stored in the header information storage unit 151 and a channel mark indicating a change of channel to the end of compressed image data in the picture for the compressed image data stored in the compressed image storage unit 170.

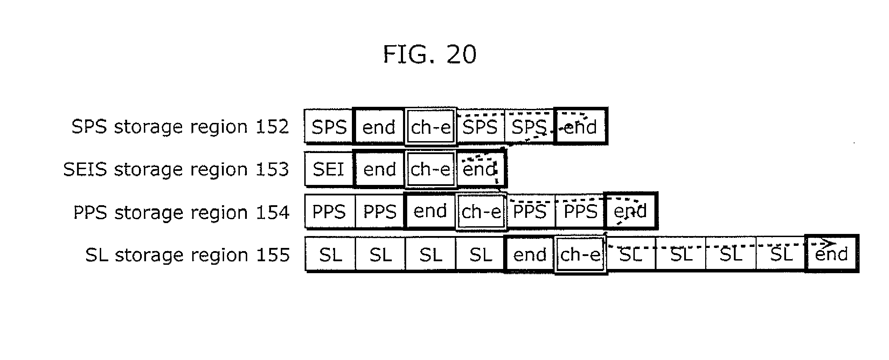

FIG. 20 is a schematic diagram of a stream, to which channel marks are added, in the header information storage unit 151. In the figure, "ch-e" indicates a channel mark. A dot-line indicates an example of reading NAL units which belong to the stream before switching.

As seen above, it is not necessary to provide a separate buffer for each stream, and it is possible to temporarily store various streams in the header information storage unit 151.

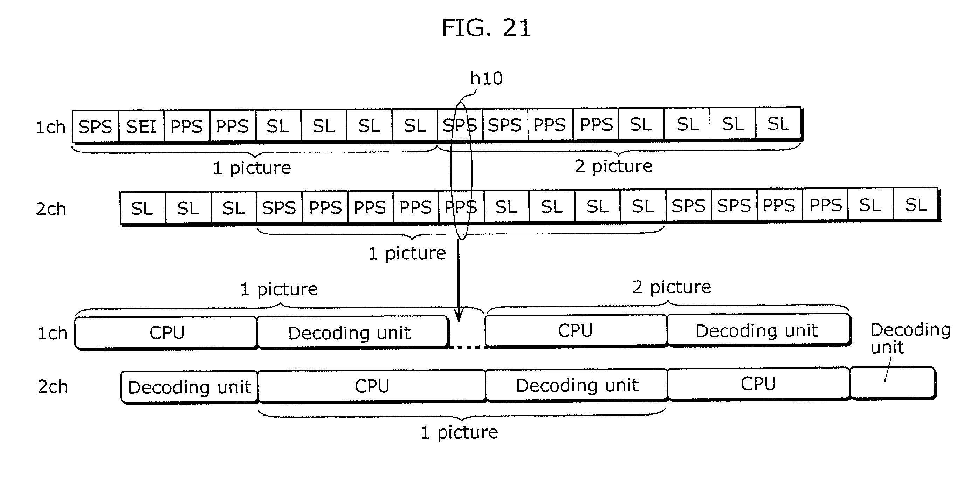

FIG. 21 is a schematic diagram illustrating a decoding operation of two streams in the moving picture decoding device. The upper row of the figure illustrates a case where a first-channel stream and a second-channel stream each consisting of NAL units are classified into header information and compressed image data and stored in the header information storage unit 151. A sequence of the first-channel stream and a sequence of the second-channel stream are the same with the respective sequences of the stream 1 and the stream 2 before being stored in the header information storage unit 151 as shown in FIG. 4. In the bottom row of the figure, CPU denotes the header analysis unit 210. As shown in the figure, the header analysis unit 210 and the decoding unit 220 can flexibly read the header information and the compressed image data without depending on the sequence in the original stream, facilitate parallel processing with a pipeline process, and reduce a waiting period.

It is to be noted that the HEA storage unit 161 and the DEA storage unit 180 may not be included in FIG. 19.

### (Embodiment 6)

A moving picture decoding device according to an embodiment 6 determines a start slice unit included in a picture and, when the start slice unit is determined, adds a start mark indicating appearance of the start slice unit to header information (each NAL unit type) stored in a header information storage unit, in addition to the moving picture decoding device according to the embodiment 4. Consequently, since it is possible to start a decoding process for the start slice unit before analysis of all header information in the picture is completed in the case where slice units lie midway in the header information in a stream, a processing efficiency of decoding can be improved.

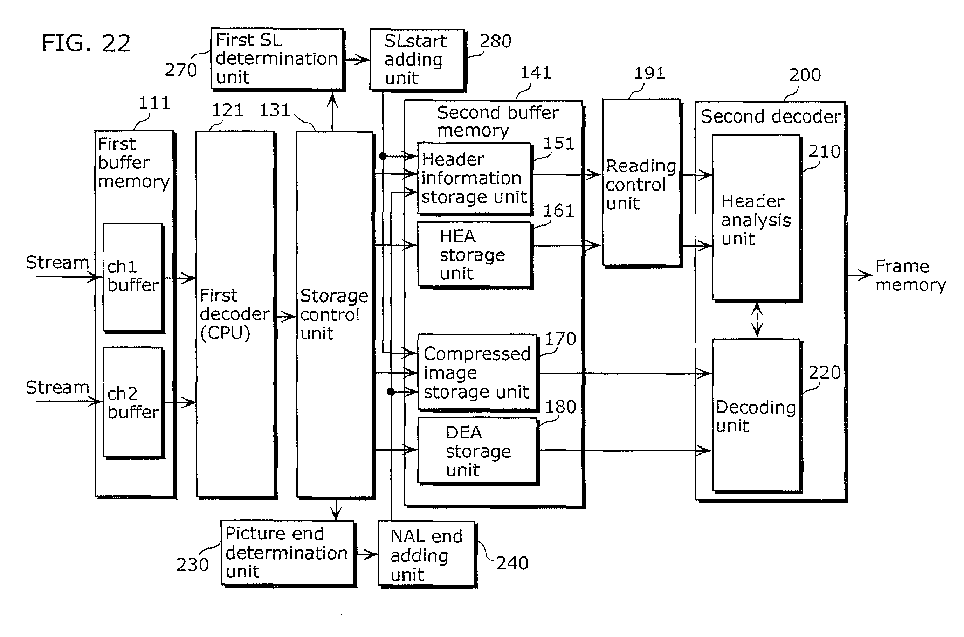

FIG. 22 is a block diagram illustrating a structure of the moving picture decoding device according to the embodiment 6. In comparison to the moving picture decoding device in FIG. 19, the moving picture decoding device in the figure differs in that a first SL determination unit 270 instead of the channel determination unit 250 and a SLstart adding unit 280 instead of the CH end adding unit 260 are included. Since the similar elements are indicated by the same reference numerals, the following omits describing the same point and mostly describes the difference.

The first SL determination unit 270 determines a start slice unit included in a picture.

When the start slice unit is determined, the SLstart adding unit 280 adds a start mark indicating appearance of the start slice unit to the header information stored in the header information storage unit 151.

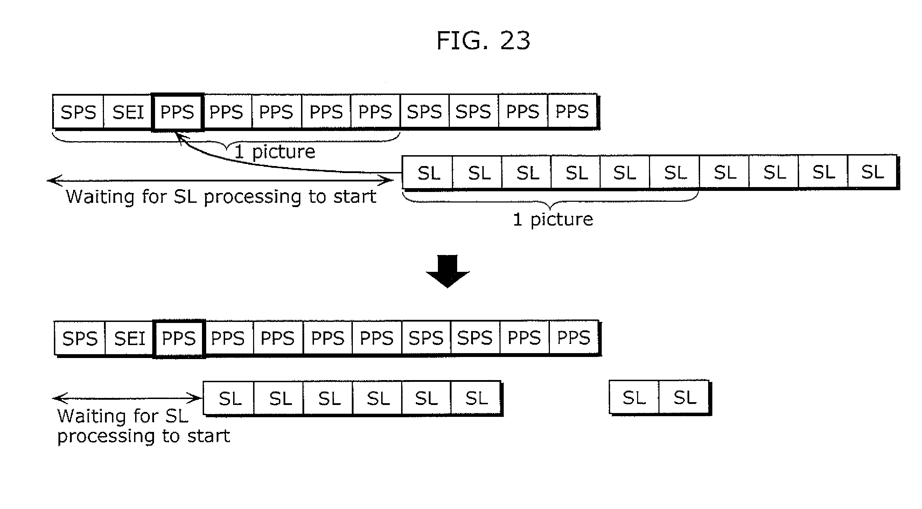

FIG. 23 is a schematic diagram illustrating simplified operations of the moving picture decoding device. The upper row in the figure illustrates NAL units consisting header information and NAL units (slice units SL) consisting compressed image data. In the embodiment 6, the header information and the compressed image data are separately stored in the buffer (the header information storage unit 151 and the compressed image storage unit 170), It is unknown which header is followed by a start slice unit SL. For this reason, as shown by the upper row in the figure, the decoding process of the start slice unit SL is started after the analysis of all the header information in the picture is completed. For example, in the case where the start slice unit SL is originally positioned right after PPS, the third NAL unit, waiting for processing to start may continue even though the decoding process can be started after the header analysis of the third NAL unit is completed.

The embodiment 6 allows the decoding process to be started at the timing shown by the bottom row in FIG. 23.

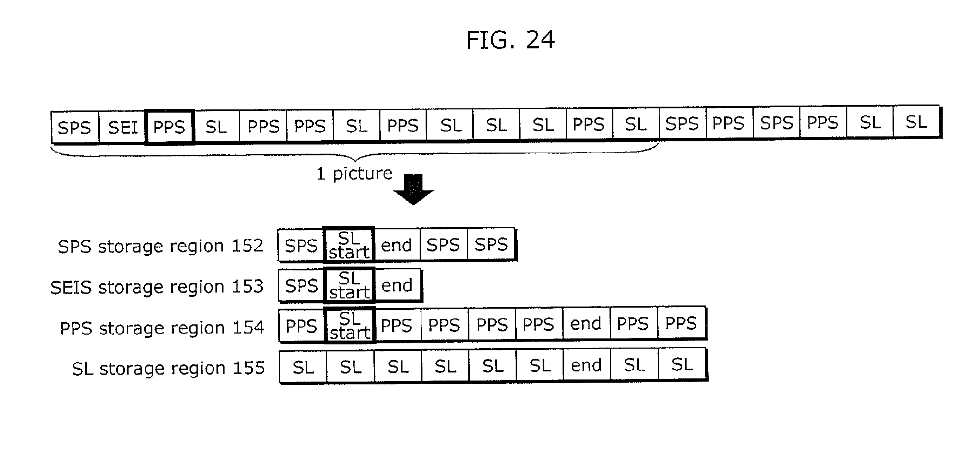

FIG. 24 is a diagram illustrating a specific example of a stream stored in the second buffer memory. In the figure, "SLstart" indicates a start mark added by the first SL determination unit 270. When start marks become available, a reading control unit 191 immediately provides slice units SL to the decoding unit 220. For this reason, as shown by the upper row in the figure, the decoding process of the start slice unit SL is started after the analysis of all the header information in the picture is completed.

### (Embodiment 7)

An embodiment 7 describes a specific example of a video device which includes the moving picture decoding device described in each of the above embodiments.

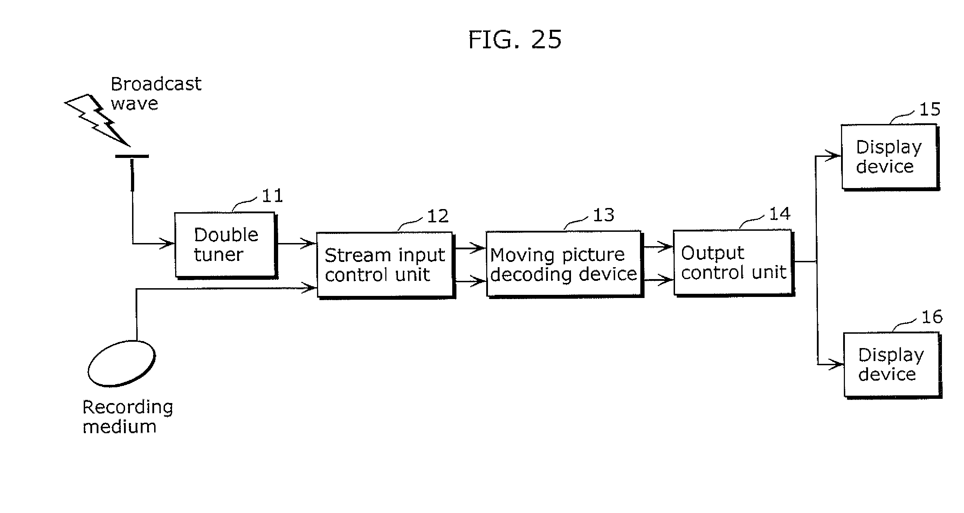

FIG. 25 is a diagram illustrating a structure of the video device according to the embodiment 7 which includes the moving picture decoding device. The video device in the figure includes a double tuner 11, a stream input control unit 12, a moving picture decoding device 13, an output control unit 14, and display devices 15 and 16, and is a digital broadcasting receiving tuner or a DVD player and recorder.

The double tuner 11 includes two tuners each receiving a program from a digital broadcast signal, and outputs the programs as streams to the stream input control unit 12. The two tuners are for two-screen display or reception of a program and a program in a competing timeslot.

Moreover, a recording medium is a DVD or the like, and a stream including contents such as a movie is outputted from the recording medium to the stream input control unit 12.

The stream input control unit 12 selects one or two streams, and outputs the selected one or two streams to the moving picture decoding device 13.

The moving picture decoding device 13 is the moving picture decoding device according to any one of the embodiments 1 to 6.

The output control unit 14 causes the display devices 15 and 16 to display moving picture data of one or two basebands as a decoding result from the moving picture decoding device 13.

The display devices 15 and 16 display two moving pictures simultaneously. For instance, the display devices 15 and 16 may have a display region that is an evenly divided PDP television screen or may be independent two display panels.

The video device allows the two streams to be decoded efficiently and to be displayed simultaneously.

It is to be noted that the video device in the figure is not limited to the digital broadcast tuner incompatible with the recording medium and the DVD player and recorder. For example, the video device may be a mobile phone with television tuner which reproduces a television broadcast and which reproduces a stream recorded on a recording medium such as an SD card, or may be a PDA similar to the mobile phone with television tuner.

It is to be noted that each functional block in the block diagram described in each of the above-mentioned embodiments is typically realized as an LSI (an integrated circuit device). The LSI may be configured of one chip or multiple chips (for instance, functional blocks other than a memory may be configured of one chip.). Although it is realized as the LSI here, the LSI may be referred to as an IC, a system LSI, a super LSI, or an ultra LSI due to a difference in integration degree.

A circuit integration method is not limited to the LSI, and may be realized with a dedicated circuit or a general-purpose processor. Field Programmable Gate Array (FPGA) permitting programming after the manufacture of the LSI or a reconfigurable processor which can reconfigure connection or setting of circuit cells in the LSI may be used.

Further, when technology for the circuit integration method appears in place of the LSI by advancement in semiconductor technology or other technology derived therefrom, the functional blocks may be integrated using such a technology. There is a chance that biotechnology is adopted.

Moreover, among each functional block, a unit which stores data may not be configured of one chip so as to have a separate structure in the same manner as the recording medium 115 according to the embodiment 7.

It is to be noted that the central part in each functional block of a block diagram and a flow chart may also be realized by a processor and a program.

As described above, the picture coding method or the picture decoding method described in each of the above-mentioned embodiments can be applied to any above-mentioned device and system, and, in so doing, the effects described in each of the above-mentioned embodiments can be obtained.

### INDUSTRIAL APPLICABILITY

The present invention is suitable for moving picture decoding devices and video devices and, in particular, a moving picture recording and reproducing device, a video camera, a television camera, a digital broadcast tuner, a DVD player, a DVD recorder, and a mobile phone.

## Claims

1. A moving picture decoding device which decodes a stream including header information and compressed image data, said moving picture decoding device comprising:
a determination unit configured to determine the header information and the compressed image data in the stream;
a header information storage unit configured to temporarily store the header information determined by said determination unit;
a header address storage unit configured to store a header end address indicating an end of header information in a picture, the header end address being an address of said header information storage unit;
a compressed image storage unit configured to temporarily store the compressed image data determined by said determination unit;
an image address storage unit configured to store an image end address indicating an end of compressed image data in the picture, the image end address being an address of said compressed image storage unit;
a header analysis unit configured to analyze the header information for each picture, based on the header end address; and
a decoding unit configured to decode the compressed image data for each picture, based on the image end address and a result of the analysis by said header analysis unit,
wherein said header analysis unit is configured to analyze header information of a picture immediately after the picture being decoded by said decoding unit.

2. The moving picture decoding device according to Claim 1, further comprising:
a storage control unit configured to control the storage of the header information in said header information storage unit, the storage of the header end address in said header address storage unit, the storage of the compressed image data in said compressed image storage unit, and the storage of the image end address in said image address storage unit, based on a result of the determination by said determination unit; and
a reading control unit configured to:
read the header information corresponding to the picture from said header information storage unit according to the header end address;
provide the read header information to said header analysis unit;
read the compressed image data corresponding to the picture from said compressed image storage unit according to the image end address; and
provide the read compressed image data to said decoding unit.

3. The moving picture decoding device according to Claim 1, further comprising:
a division unit configured to divide a slice unit included in the compressed image data into a slice header and slice data; and
a storage control unit configured to:
store the header information determined by said determination unit and the slice header generated through the division by said division unit in said header information storage unit;
store the compressed image data and the slice data in said compressed image storage unit; and
update said header address storage unit and said image address storage unit along with the storage of the header information and the slice header and the storage of the compressed image data and the slice data.

4. The moving picture decoding device according to Claim 1,
wherein said determination unit is further configured to determine header types in the header information,
said header information storage unit includes storage regions each corresponding to one of the header types in the header information, and
said moving picture decoding device further comprises:
a storage control unit configured to store a header having one of the header types determined by said determination unit in one of the storage regions corresponding to the header type of the header, and to store, in said header address storage unit, a header end address of the header in an end of a picture for each header type; and
a reading control unit configured to:
read a header corresponding to the picture from said header information storage unit for each header type according to the header end address of each header type;
provide the read header to said header analysis unit;
read the compressed image data corresponding to the picture from said compressed image storage unit according to the image end address; and
provide the read compressed image data to said decoding unit.

5. The moving picture decoding device according to Claim 1, further comprising:
a detection unit configured to detect the end of the header information in the picture and the end of the compressed image data in the picture; and
an adding unit configured to add an end mark to the detected end of the header information stored in said header information storage unit, and an end mark to the detected end of the compressed image data stored in said compressed image storage unit.

6. The moving picture decoding device according to Claim 4, further comprising:
a detection unit configured to detect an end of an end header among headers having a same header type in the picture and the end of the compressed image data in the picture; and
an adding unit configured to add, for each header type, an end mark to an end of header information having a same header information type in the picture for the header information stored in said header information storage unit, and an end mark to the end of the compressed image data stored in said compressed image storage unit.

7. The moving picture decoding device according to Claim 2,
wherein said determination unit is configured to determine header information and compressed image data in each of plural channel streams, and
said moving picture decoding device further comprises:
a detection unit configured to detect an end of header information in a picture and an end of compressed image data in the picture;
a judgment unit configured to judge whether or not a current picture and a picture immediately after the current picture each belong to a different stream, the current picture and the picture being determined by said determination unit; and
an adding unit configured to add: a mark indicating a change of channel to the detected end of the header information stored in said header information storage unit; and a mark indicating a change of channel to the detected end of the compressed image data stored in said compressed image storage unit, in the case where it is judged that the current picture and the picture each belong to the different stream.

8. The moving picture decoding device according to Claim 4,
wherein said determination unit is configured to determine header information and compressed image data in each of plural channel streams, and
said moving picture decoding device further comprises:
a detection unit configured to detect an end of an end header among headers having a same header type in the picture and the end of the compressed image data in the picture;
a judgment unit configured to judge whether or not a current picture and a picture immediately after the current picture each belong to a different stream; and
an adding unit configured to add, for each header type, a mark indicating a change of channel to an end of header information having a same header information type in the picture for the header information stored in said header information storage unit in the case where it is judged that the current picture and the picture each belong to the different stream, and a mark indicating a change of channel to the end of the compressed image data in the picture for the compressed image data stored in said compressed image storage unit.

9. The moving picture decoding device according to Claim 8,
wherein said adding unit is further configured to add, for each header type, an end mark to the end of the header information having the same header information type in the picture for the header information stored in said header information storage unit, and an end mark to the end of the compressed image data in the picture for the compressed image data stored in said compressed image storage unit.

10. The moving picture decoding device according to Claim 1,
wherein said determination unit is configured to determine header information and compressed image data in each of plural channel streams,
said header information storage unit, said header address storage unit, said compressed image storage unit, and said image address storage unit include storage regions each corresponding to the plural channels,
said moving picture decoding device further comprises detection units and adding units, which correspond to the plural channels,
each detection unit is configured to detect, in a corresponding channel stream, the end of the header information in the picture and the end of the compressed image data in the picture, and
each adding unit is configured to add an end mark to the detected end of the header information stored in a storage region corresponding to the channel stream, and an end mark to the detected end of the compressed image data stored in a storage region corresponding to the channel stream.

11. The moving picture decoding device according to Claim 5, further comprising
a slice determination unit configured to determine a start slice included in the picture,
wherein said adding unit is further configured to add, to the header information stored in said header information storage unit, a start mark indicating appearance of the start slice when the start slice is determined.

12. The moving picture decoding device according to Claim 1, further comprising
a temporary storage unit configured to temporarily store a stream inputted from outside,
wherein said determination unit includes: an arithmetic decoding unit configured to perform, as preprocessing, arithmetic decoding on the stream stored by said temporary storage unit; and a determination unit configured to determine header information and compressed image data in the arithmetically decoded stream.

13. A semiconductor device which decodes a stream including header information and compressed image data, said semiconductor device comprising:
a determination unit configured to determine the header information and the compressed image data in the stream;
a header information storage unit configured to temporarily store the header information determined by said determination unit;
a header address storage unit configured to store a header end address indicating an end of header information in a picture, the header end address being an address of said header information storage unit;
a compressed image storage unit configured to temporarily store the compressed image data determined by said determination unit;
an image address storage unit configured to store an image end address indicating an end of compressed image data in the picture, the image end address being an address of said compressed image storage unit;
a header analysis unit configured to analyze the header information for each picture based on the header end address; and
a decoding unit configured to decode the compressed image data for each picture, based on the image end address and a result of the analysis by said header analysis unit,
wherein said header analysis unit is configured to analyze header information of a picture immediately after the picture being decoded by said decoding unit.

14. A video device, comprising:
an obtainment unit configured to obtain a stream from one of a recording medium and a broadcast signal;
said picture decoding device according to Claim 1; and
an output control unit configured to output a moving picture decoded by said picture decoding device to an external display device.

15. A moving picture decoding method for decoding a stream including header information and compressed image data, said moving picture decoding method comprising:
determining the header information and the compressed image data in the stream;
storing the determined header information in a first buffer memory;
storing, in a second buffer memory, a header end address indicating an end of header information in a picture, the header end address being an address of the first buffer memory;
storing, in a third buffer memory, the compressed image data determined by a determination unit;
storing, in a fourth buffer memory, an image end address indicating an end of compressed image data in the picture, the image end address being an address of the third buffer memory;
analyzing the header information for each picture based on the header end address; and
decoding the compressed image data for each picture, based on the image end address and a result of the analysis in said analyzing,
wherein, in said analyzing, header information of a picture immediately after the picture being decoded by said decoding unit is decoded.
